# EUROPEAN PATENT APPLICATION

(11) **EP 3 739 488 A1**
(43) Date of publication of application: **18.11.2020**
(21) Application number: 20170344.4
(22) Date of filing: 20.04.2020
(51) Int. Cl.: G06F 21/62, G06F 16/00

(54) **PROGRAM, SERVER DEVICE, AND INFORMATION PROCESSING METHOD**

(30) Priority: 13.05.2019 JP 2019090954
(71) Applicant: FUJITSU LIMITED, Kanagawa 211-8588 (JP)
(72) Inventor: Sato, Izuru, Kanagawa, 211-8588 (JP)
(74) Representative: Hoffmann Eitle

(57) **Abstract**

A program causing a processor included in a computer to execute a process, the process includes receiving a request for obtaining personal data including data information associated with attribute information that satisfies an attribute condition, determining, based on a determination index, an execution order between consent verification processing to verify consent for use of the personal data and filter processing of the data information based on a filter condition, when executing the consent verification processing before executing the filter processing, in the filter processing, extracting, among personal data provided with the consent, personal data including data information that satisfies the filter condition, and when executing the filter processing before executing the consent verification processing, executing the consent verification processing only for the personal data including data information that satisfies the filter condition.

## Description

### FIELD

The embodiments discussed herein are related to a program, a server device, and an execution order determination method.

### BACKGROUND

Data distribution networks in which data held by companies are mutually utilized and data is distributed among the companies have attracted much attention. New services and businesses are expected to be created due to the promotion of data distribution.

Data to be distributed in a data distribution network includes, in addition to industrial data held by companies, personal data (personal information). When distributing personal data, the user of the data has to obtain the consent of the person, and a process of determining whether to permit use of personal data is executed.

Techniques relating to distribution of personal data have been proposed. For example, one proposed technique causes restrictions on disclosure of personal information to be set by input of an information provider and provides personal information in a range set for an information user. Another technique is proposed. In this technique, high detail personal information and low detail personal information are generated so that personal information in accordance with a service result satisfactory condition is provided.

For example, as related art, Japanese Laid-open Patent Publication No. 2002-324068, International Publication Pamphlet No. WO 2008/108158, and so on are disclosed.

### SUMMARY

### [Technical Problem]

In data distribution networks, in the case of determining whether to permit use of personal data, consent verification processing to verify consent/non-consent to the use of personal data and filter processing to extract personal data that satisfies conditions requested by the user are executed.

In this case, depending on whether the consent verification processing is executed first and the filter processing is executed secondly or the filter processing is executed first and the consent verification processing is executed secondly, there is a difference in reduction in the number of targets when the number of targets is narrowed down. It is therefore desired to realize a technique that may reduce the number of targets by adaptively switching processing to be executed first between the consent verification processing and the filter processing.

One aspect of this disclosure is directed to providing a program, a server device, and an execution order determination method aimed at reducing the number of targets to be narrowed down in a process of determining whether to permit use of personal data.

### [Solution to Problem]

According to an aspect of the embodiments, a program causing a processor included in a computer to execute a process, the process includes receiving a request for obtaining personal data including data information associated with attribute information that satisfies an attribute condition, determining, based on a determination index, an execution order between consent verification processing to verify consent for use of the personal data and filter processing of the data information based on a filter condition, when executing the consent verification processing before executing the filter processing, in the filter processing, extracting, among personal data provided with the consent, personal data including data information that satisfies the filter condition, and when executing the filter processing before executing the consent verification processing, executing the consent verification processing only for the personal data including data information that satisfies the filter condition.

### [Advantageous Effects of Invention]

According to one aspect of this disclosure, the number of targets to be narrowed down may be reduced in the process of determining whether to permit use of personal data.

### BRIEF DESCRIPTION OF DRAWINGS

FIG. 1 is a diagram for explaining an example of a server device;
FIG. 2 is a diagram illustrating an example of a configuration of a data distribution system;
FIG. 3 is a diagram illustrating an example of filter information of data and a consent/non-consent relationship;
FIG. 4 is a diagram illustrating an example of a hardware configuration of an authorization server;
FIG. 5 is a diagram illustrating an example of functional blocks of an authorization server;
FIG. 6 is a diagram illustrating an example of a case in which the processing efficiency differs because of a difference in the execution order between consent verification processing and filter processing;
FIG. 7 is a diagram illustrating an overall operation sequence of distribution of personal data;
FIG. 8 is a flowchart illustrating an example of operations of a process of determining whether to permit use of personal data;
FIG. 9 is a flowchart illustrating an example of narrowing operations;
FIG. 10 is a diagram illustrating an example of a dictionary table;
FIG. 11 is a diagram illustrating an example of a dictionary table;
FIG. 12 is a flowchart illustrating an example of operations of determining an execution order based on a determination index other than a dictionary table; and
FIG. 13 is a flowchart illustrating an example of operations of determining an execution order based on a determination index other than a dictionary table.

### DESCRIPTION OF EMBODIMENTS

Embodiments will be described below with reference to the accompanying drawings.

### [First Embodiment]

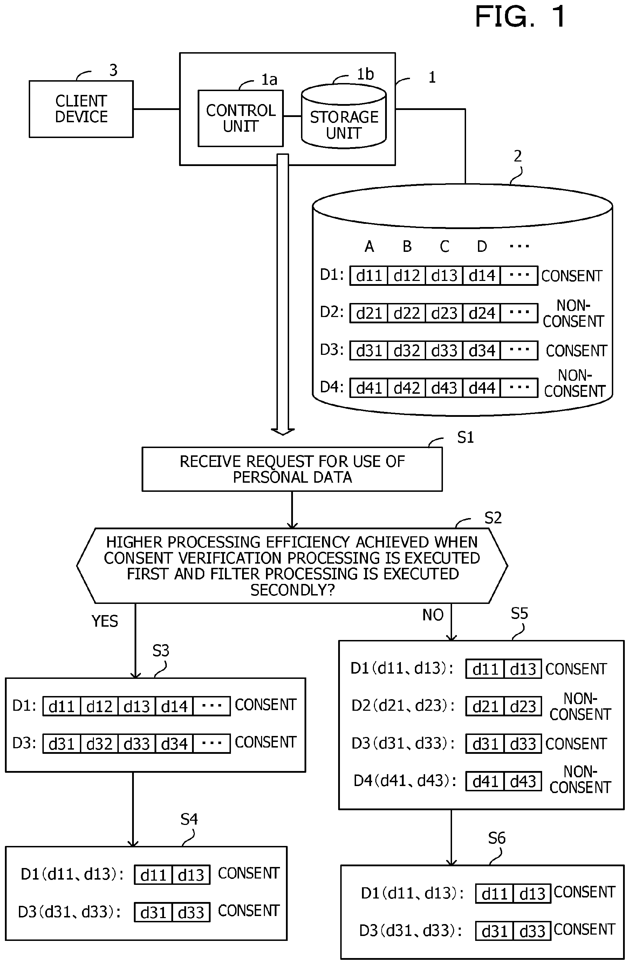

A first embodiment will be described with reference to FIG. 1. FIG. 1 is a diagram for explaining an example of a server device. A server device 1 includes a control unit 1a and a storage unit 1b. The server device 1 is coupled to a resource device 2 and a client device 3.

The resource device 2 holds a data group including personal data of users. In the case of using personal data from among the data group held by the resource device 2, the client device 3 transmits a use request to the server device 1.

According to the use request from the client device 3, the server device 1 determines whether to permit use of personal data for providing the personal data to the client device 3 and, depending of a determination result, performs relay control for transmitting the personal data to the client device 3.

When the client device 3 makes a request for use of personal data, the control unit 1a executes, as the process of determining whether to permit use of personal data, consent verification processing and filter processing. The consent verification processing is processing to verify whether consent is given to the use of personal data having attributes requested by the client device 3. The filter processing is processing to extract personal data that satisfies conditions (filter conditions) or attributes requested by the client device 3, from the data group held by the resource device 2.

In the case where the control unit 1a executes the consent verification processing and the filter processing, the control unit 1a determines, based on a determination index, the execution order between the consent verification processing and the filter processing. The storage unit 1b stores information on the attribute requested by the client device 3, information on the condition requested by the client device 3, information (such as a dictionary table described later) related to a determination index, information on control of operations, and the like.

Operations will be described using an example illustrated in FIG. 1. Personal data D1, ..., D4 is held in the resource device 2. It is assumed that the filter conditions requested from the client device 3 include conditions A, ..., D.

The personal data D1 is such data that consent is given for use of the data with the client device 3, and includes data d11 satisfying the condition A, data d12 satisfying the condition B, data d13 satisfying the condition C, and data d14 satisfying the condition D.

The personal data D2 is such data that consent is given for use of the data with the client device 3, and includes data d21 satisfying the condition A, data d22 satisfying the condition B, data d23 satisfying the condition C, and data d24 satisfying the condition D.

The personal data D3 is such data that consent is given for use of the data with the client device 3, and includes data d31 satisfying the condition A, data d32 satisfying the condition B, data d33 satisfying the condition C, and data d34 satisfying the condition D.

The personal data D4 is such data that consent is given for use of the data with the client device 3, and includes data d41 satisfying the condition A, data d42 satisfying the condition B, data d43 satisfying the condition C, and data d44 satisfying the condition D.

It is assumed that the client device 3 requests personal data that satisfies the conditions A and C among the conditions A, B, C, and D.

[Step S1] The control unit 1a receives a request for use of personal data transmitted from the client device 3.

[Step S2] The control unit 1a determines the execution order between the consent verification processing and the filter processing, based on a determination index (a dictionary table or the like being used as the determination index). The case of executing the consent verification processing first and executing the filter processing secondly is referred to as a first execution order, and the case of executing the filter processing first and executing the consent verification processing secondly is referred to as a second execution order. At this point, if it is determined that the first execution order has a higher processing efficiency than the second execution order, the process proceeds to step S3. If it is determined that the second execution order has a higher processing efficiency than the first execution order, the process proceeds to step S5.

[Step S3] The control unit 1a executes the consent verification processing to verify whether consent is given to the use of personal data D1, ..., D4. In this example, for the use of the personal data D1 and D3, consent is provided to the client device 3. For the use of the personal data D2 and D4, consent is not provided to the client device 3. Therefore, the control unit 1a extracts the personal data D1 and D3 for which consent is given.

[Step S4] The control unit 1a executes the filter processing to extract personal data that satisfies conditions requested by the client device 3. In this example, the client device 3 requests data that satisfies the conditions A and C.

The control unit 1a therefore extracts personal data D1 (d11, d13) and D3 (d31, d33), which satisfy the conditions A and C, from the personal data D1 and D3 for which consent is given. The control unit 1a transmits the extracted personal data D1 (d11, d13) and D3 (d31, d33) to the client device 3.

[Step S5] The control unit 1a executes the filter processing to extract personal data that satisfies conditions requested by the client device 3. In this example, the client device 3 requests data that satisfies the conditions A and C.

The control unit 1a therefore extracts personal data D1 (d11, d13), D2 (d21, d23), D3 (d31, d33), and D4 (d41, d43), which satisfy the conditions A and C, from the personal data D1, ..., D4.

[Step S6] The control unit 1a executes the consent verification processing to verify whether consent is given to the use of personal data. In this example, for the use of the personal data D1 and D3, consent is provided to the client device 3. For the use of the personal data D2 and D4, consent is not provided to the client device 3.

The control unit 1a therefore extracts the personal data D1 (d11, d13) and D3 (d31, d33), for which consent is given, from the personal data extracted in step S5. The control unit 1a transmits the extracted personal data D1 (d11, d13) and D3 (d31, d33) to the client device 3.

In such a way, the server device 1 adaptively determines, based on a determination index, the execution order between the consent verification processing, which verifies whether consent is given to the use of personal data having attributes requested by the client device 3, and the filter processing, which extracts personal data that satisfies conditions requested by the client device 3 from the data group. Thereby, the number of targets to be narrowed down in the process of determining whether to permit use of personal data may be reduced, enabling an improvement in processing efficiency.

### [Second Embodiment]

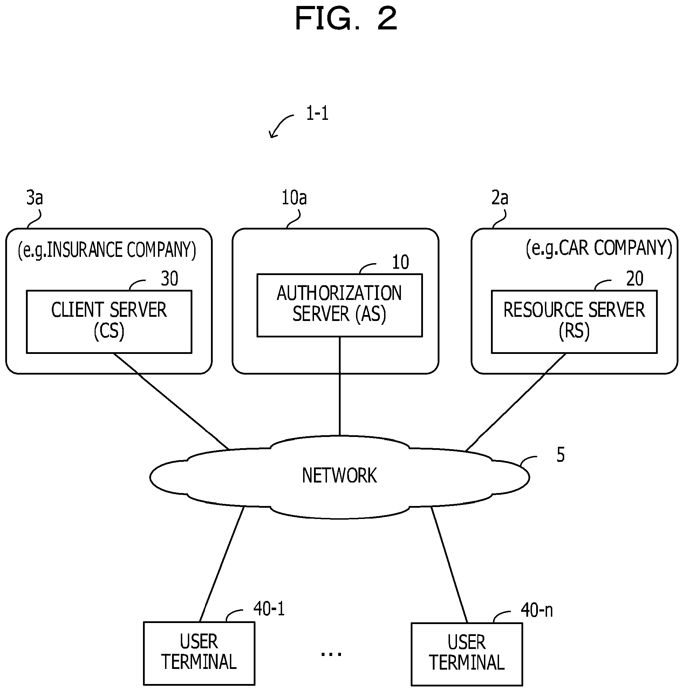

Next, a second embodiment will be described. In the second embodiment, the functions of the present disclosure are applied to a data distribution network where transactions of personal data are performed. FIG. 2 is a diagram illustrating an example of a configuration of a data distribution system. A data distribution system 1-1 includes a consent portal 10a, a data providing entity 2a, a data usage entity 3a, and user terminals 40-1, ..., 40-n (user terminals 40 when collectively referred to). An entity is the subject of an activity, such as an individual person or a company.

The consent portal 10a is a web portal to perform consent verification when transferring personal data. The data providing entity 2a holds data and provides requested data among the held data to a requesting source. The data usage entity 3a requests data and uses the provided data.

The consent portal 10a includes an authorization server (AS) 10, the data providing entity 2a includes a resource server (RS) 20, and the data usage entity 3a includes a client server (CS) 30. The authorization server 10 has the functions of the server device 1 in FIG. 1.

The authorization server 10, the resource server 20, the client server 30, and the user terminal 40 are coupled to each other via a network (for example, the Internet) 5.

The resource server 20 holds data transmitted from the user terminal 40 of a user who is the data owner, and provides requested data among the held data to the client server 30.

The client server 30 requests the resource server 20 to provide data and uses the data provided from the resource server 20. At the time when the data is provided from the resource server 20 to the client server 30, the authorization server 10 executes a process of determining whether to permit use of personal data.

The data providing entity 2a and the data usage entity 3a are, for example, companies. The data providing entity 2a may correspond to a car company and the data usage entity 3a may correspond to an insurance company. The user terminal 40 is the entity of an individual person different from a company.

In such a case, for example, the car company holds driving data of users and provides driving data requested by the insurance company to the insurance company. The insurance company requests the car company to provide driving data and acquires the provided driving data to use the driving data for paperwork, such as insurance appraisal. The driving data includes personal information. Therefore, when the driving data is delivered from the car company to the insurance company, it is desired for the user, who is the owner of the personal information, to give consent to the delivery.

Verification of the consent of the user is performed by the authorization server 10 in the consent portal 10a. The authorization server 10 verifies whether the user himself has given consent to the provision of driving data to the insurance company, which is the requesting source of data. If the consent is verified, the right to access the driving data is given to the insurance company.

In the data request from the client server 30 to the resource server 20, personal attribute and a filter condition desired by the data usage entity 3a are indicated. Consent verification in accordance with the personal attributes is performed on the authorization server 10, and personal data is extracted (the filter processing) in accordance with the filter conditions (hereinafter referred to as filter information in some cases) on the resource server 20. In some cases, the filter information may be provided and received between the authorization server 10 and the resource server 20, and the filter processing may be shared and executed by the authorization server 10 and the resource server 20.

It is assumed that the insurance company requests the car company to provide the driving data of users aged in their thirties who own a car with a model of Model A. In this driving data, age = thirties is included as the personal attribute information, and car model = Model A is included as the filter information.

For the personal attribute information of age = thirties, users of age = thirties are extracted from all users by the authorization server 10, and consent verification of the users of age = thirties is performed by the authorization server 10. Car model = Model A is filter information different from the personal attribute information. Data of car model = Model A is extracted from data of all car models by the resource server 20.

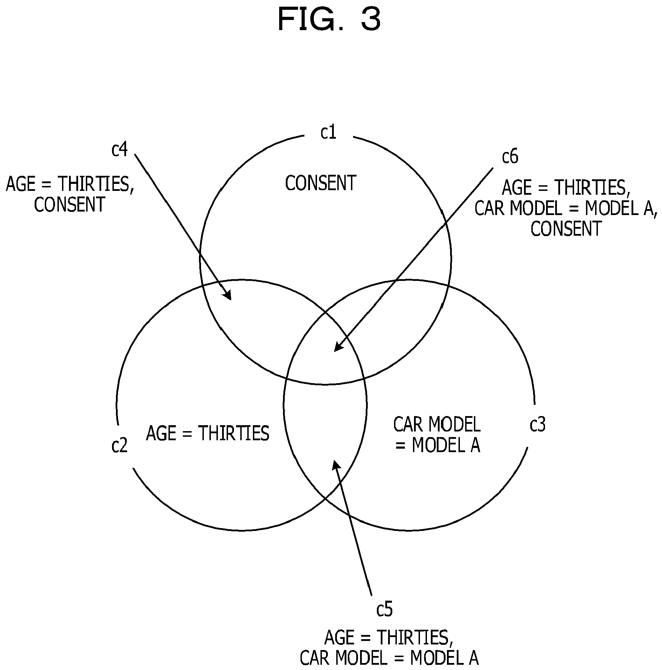

FIG. 3 is a diagram illustrating an example of filter information of data and the consent/non-consent relationship. A range c1 indicates a set of data where the user consents to provide the data to a third party (for example, an insurance company), and ranges other than the range c1 indicate sets of data where consent is not given to provide the data to the third party.

A range c2 indicates a set of data having the attribute of age = thirties, and ranges other than the range c2 indicate sets of data where age ≠ thirties. A range c3 indicates a set of data of cars with car model = Model A, and ranges other than the range c3 indicate sets of data of cars other than the cars with car model = Model A.

A range c4 is the intersection of the ranges c1 and c2, indicating a set of data where age = thirties and consent is given to provide the data to a third party. A range c5 is the intersection of the ranges c2 and c3, indicating a set of data where age = thirties and cars with car model = Model A are owned. A range c6 is the intersection of the ranges c1, c2, and c3, indicating a set of data where age = thirties, cars with car model = Model A are owned, and consent is given to provide the data to a third party.

Since the driving data of a user who owns a car with a car model of Model A, who is aged in his thirties, and who has given his consent to the use of data is included in the range c6, the range c6 is the range from which data is actually obtained. In the case of obtaining data included in the range c6, in some cases, the range c4 where the range c1 and the range c2 overlap each other is determined and then the range c6 where the range c4 and the range c3 overlap each other is determined.

However, for example, it is assumed that there are 10 million users who are age = thirties and there are 10,000 users who own cars with car model = Model A. In this case, consent verification for 10 million users is performed to determine the users of the range c4 who are age = thirties and have given their consent. Subsequently, filtering is performed to determine whether the users own cars with car model = Model A.

In the case of this example, if consent verification is performed first, processing load applied until data is narrowed down to the range c4 increases, and the time taken until the output of a determination result increases. It is therefore not possible to efficiently execute the process of determining whether to permit use of personal data.

Accordingly, in the case of this example, when filtering to determine whether the users are age = thirties and own cars with car model = Model A is performed first and then consent verification is performed, the effect of narrowing data is higher than otherwise. For example, in the case of obtaining data included in the range c6, when the range c5 where the range c2 and the range c3 overlap each other is determined and then the range c6 where the range c5 and the range c1 overlap each other is determined, the number of targets to be narrowed down is reduced, thereby improving the processing efficiency.

In view of such points, the present disclosure aims at adaptively determining whether to execute first the consent verification processing or the filter processing, to reduce the number of targets to be narrowed down in the process of determining whether to permit use of personal data, improving the processing efficiency and reducing the processing load.

### <Hardware Configuration>

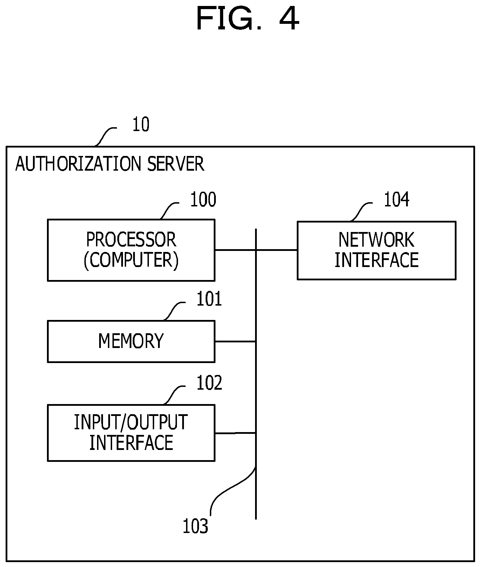

FIG. 4 is a diagram illustrating an example of a hardware configuration of an authorization server. In the authorization server 10, the entire device is controlled by a processor (computer) 100.

A memory 101 and a plurality of peripheral devices are coupled to the processor 100 via a bus 103. The processor 100 may be a multiprocessor. The processor 100 is, for example, a central processing unit (CPU), a microprocessor unit (MPU), a digital signal processor (DSP), an application-specific integrated circuit (ASIC), or a programmable logic device (PLD). The processor 100 may be a combination of two or more elements of the CPU, MPU, DSP, ASIC, and PLD.

The memory 101 is used as a main storage device of the authorization server 10. At least some of programs of an operating system (OS) and application programs, which are executed by the processor 100, are temporarily stored in the memory 101. Various types of data for processing executed by the processor 100 are stored in the memory 101.

The memory 101 is used as an auxiliary storage device of the authorization server 10. In the memory 101, programs of the OS, application programs, and various types of data are stored. The memory 101 may include, as the auxiliary storage device, a semiconductor storage device, such as a flash memory or a solid state drive (SSD), or a magnetic recording medium, such as a hard disk drive (HDD).

The peripheral devices coupled to the bus 103 include an input/output interface 102 and a network interface 104. The input/output interface 102 is coupled to a monitor (for example, a light emitting diode (LED), a liquid crystal display (LCD), or the like) that functions as a display device for displaying the state of the authorization server 10 according to an instruction from the processor 100.

The input/output interface 102 may be coupled to an information input device, such as a keyboard or a mouse. The input/output interface 102 transmits signals transmitted from the information input device to the processor 100.

The input/output interface 102 functions as a communication interface for coupling of the peripheral devices. For example, the input/output interface 102 may be coupled to an optical drive device that reads data recorded on an optical disk by using laser light or the like. Examples of the optical disk include a Blu-ray Disc (registered trademark), a compact disc read-only memory (CD-ROM), and a CD-recordable (R)/rewritable (RW).

The input/output interface 102 allows a memory device and a memory reader/writer to be coupled. The memory device is a recording medium equipped with a function to communicate with the input/output interface 102. The memory reader/writer is a device to write data to a memory card or to read data from the memory card. The memory card is a card-type recording medium.

The network interface 104 performs interface control with the network 5. For example, a network interface card (NIC), a wireless local area network (LAN) card, or the like may be used as the network interface 104. Data received by the network interface 104 is output to the memory 101 or the processor 100.

The processing functions of the authorization server 10 may be implemented by the hardware configuration as described above. For example, the authorization server 10 may perform control according to the present disclosure by the processor 100 executing each of predetermined programs.

The authorization server 10, for example, implements the processing functions of the present disclosure by executing a program recorded on a computer-readable recording medium. A program, in which content of processing to be executed by the authorization server 10 is described, may be recorded on various recording media.

For example, programs to be executed by the authorization server 10 may be stored in an auxiliary storage device. The processor 100 loads at least some of the programs in the auxiliary storage device into the main storage device and executes the programs.

The programs may be recorded on a portable recording medium, such as an optical disk, a memory device, or a memory card. The programs stored in the portable recording medium are executable, for example, after being installed in an auxiliary storage device by control from the processor 100. The processor 100 may read the programs directly from the portable recording medium to execute the programs. The resource server 20 and the client server 30 may be configured as hardware as illustrated in FIG. 4.

### <Functional Block>

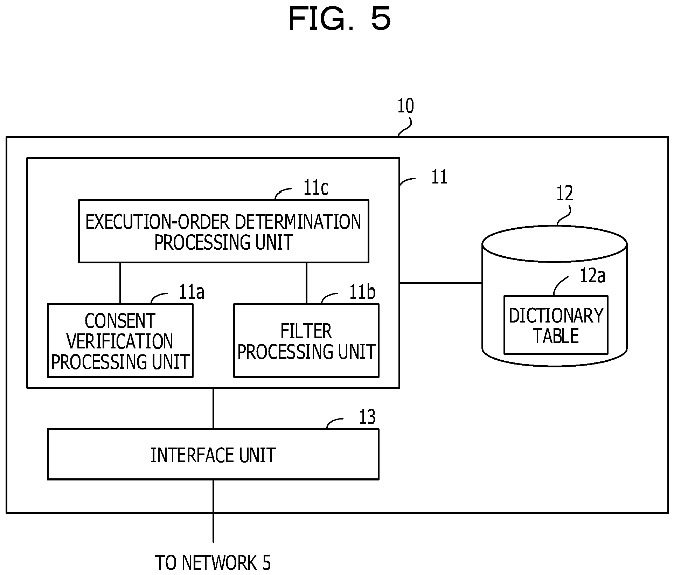

FIG. 5 is a diagram illustrating an example of functional blocks of an authorization server. The authorization server 10 includes a control unit 11, a storage unit 12, and an interface unit 13. The control unit 11 includes a consent verification processing unit 11a, a filter processing unit 11b, and an execution-order determination processing unit 11c.

The consent verification processing unit 11a executes processing of verifying whether consent is given to the use of personal data having attributes requested by the client device 3. The filter processing unit 11b executes processing of extracting personal data that satisfies conditions requested by the client device 3 from a data group held by the resource device 2. The filter processing unit 11b may transmit part of the filter information to the resource server 20 and share execution of the filter processing with the resource server 20.

The execution-order determination processing unit 11c determines, based on a determination index, the execution order between the consent verification processing and the filter processing. The storage unit 12 stores, for example, a dictionary table 12a including a determination index (the dictionary table 12a will be described later in detail). The interface unit 13 performs communication interface control with the network 5.

The control unit 11 is implemented by the processor 100 in FIG. 4, and the storage unit 12 is implemented by the memory 101 in FIG. 4. The interface unit 13 is implemented by the network interface 104 (or the input/output interface 102) of FIG. 4.

### <Case with Difference in Processing Efficiency>

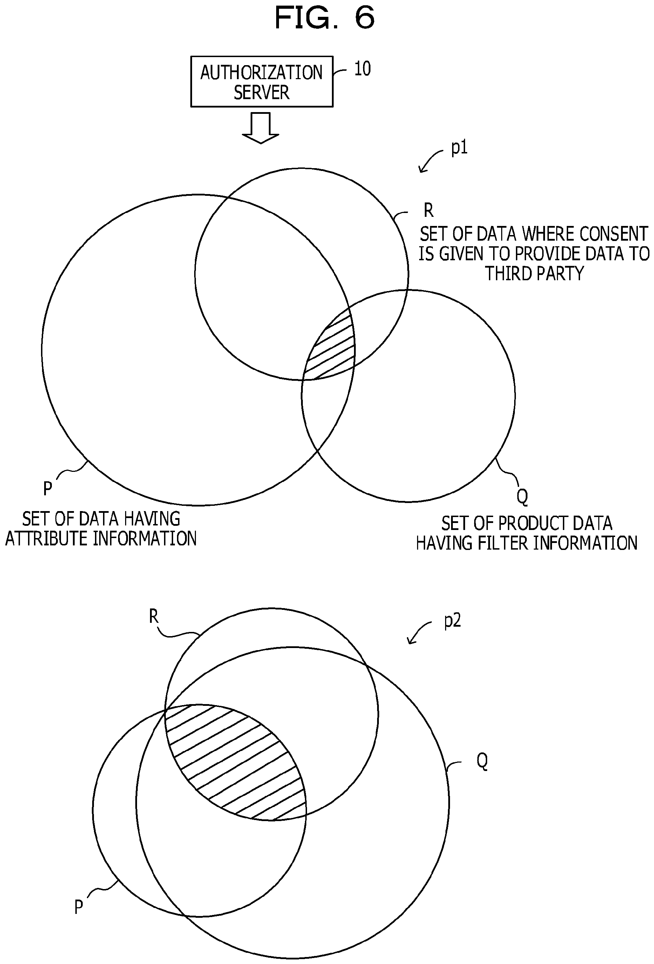

FIG. 6 is a diagram illustrating an example of a case in which the processing efficiency differs because of a difference in the execution order between consent verification processing and filter processing. In pattern p1, p2, a range P indicates a set of data having attribute information, a range Q indicates a set of product data having filter information, and a range R indicates a set of data where consent is given to provide the data to a third party.

It is assumed that the data of the intersection (the shadow area) of the ranges P, Q, and R is to be extracted. The pattern p1 indicates the case where when the filter processing is executed before execution of the consent verification processing, higher processing efficiency (narrowing effect) is achieved.

When after the intersection of the range P and the range Q is determined, the intersection (the shadow area) of the determined intersection and the range R is determined, a higher narrowing effect is achieved than when after the intersection of the range P and the range R is determined, the intersection (the shadow area) of the determined intersection and the range Q is determined.

Accordingly, in a state as indicated in the pattern p1, when the filter processing is executed before execution of the consent verification processing, the processing efficiency is expected to be higher, leading to mitigation of the processing load. In this example, the filter processing corresponds to processing of determining the intersection of the range P and the range Q, and the consent verification processing corresponds to processing of determining the intersection of the intersection determined by the filter processing and the range R.

In contrast, the pattern p2 indicates the case where when the consent verification processing is executed before execution of the filter processing, the number of targets to be narrowed down is reduced to achieve a higher processing efficiency. When after the intersection of the range P and the range R is determined, the intersection (the shadow area) of the determined intersection and the range Q is determined, a higher narrowing effect is achieved than when after the intersection of the range P and the range Q is determined, the intersection (the shadow area) of the determined intersection and the range R is determined.

Accordingly, in a state as indicated in the pattern p2, when the consent verification processing is executed before execution of the filter processing, the number of targets to be narrowed down is expected to be reduced to achieve a higher processing efficiency, leading to mitigation of the processing load. In this example, the consent verification processing corresponds to processing of determining the intersection of the range P and the range R, and the filter processing corresponds to processing of determining the intersection of the intersection determined by the consent verification processing and the range Q.

### <Overall Operation Sequence>

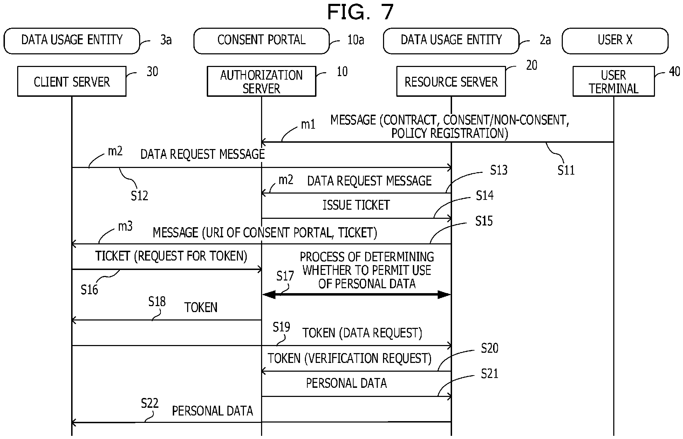

FIG. 7 is a diagram illustrating an overall operation sequence of distribution of personal data. User X enters into a contract of a service of the data usage entity 3a (for example, an insurance company) via the consent portal 10a. In this case, user X declares in advance his intentions of consent or non-consent to provide data (for example, driving data) held by the data providing entity 2a (for example, a car company) to the data usage entity 3a.

[Step S11] The user terminal 40 transmits a message m1 to the authorization server 10 belonging to the consent portal 10a. In the message m1, something to the effect that user X will enter into a contract of a service of the data usage entity 3a, and a declaration of intent of consent or non-consent to provide data to the data usage entity 3a are set.

If user X does not want to provide part of data to the data usage entity 3a, user X may register the policy in advance via the consent portal 10a in the data usage entity 3a. For example, a policy, such as a policy of not providing driving data of some area and weekend driving data, may be registered. Such a policy is set in the message m1.

[Step S12] The client server 30 belonging to the data usage entity 3a transmits a data request message m2 to the resource server 20 belonging to the data providing entity 2a.

For example, when the data usage entity 3a wants to obtain driving data of the current member or driving data of a new member, the data request message m2 is transmitted from the client server 30 to the resource server 20.

The data request message m2 includes the format of data managed on the resource server 20, attribute information (for example, a man in his thirties) requested by the data usage entity 3a, and filter information (for example, drive record data on a certain day).

[Step S13] When the resource server 20 receives the data request message m2, the resource server 20 transmits the data request message m2 to the authorization server 10.

[Step S14] The authorization server 10 analyzes and holds the attribute information and filter information included in the data request message m2. The authorization server 10 issues a ticket (access ticket) that defines access authority, and transmits the ticket to the resource server 20.

[Step S15] When the resource server 20 receives the ticket, the resource server 20 responds by transmitting a message m3 to the client server 30. The message m3 includes at least the Uniform Resource Identifier (URI) of the consent portal 10a and the ticket.

[Step S16] Using the URI of the consent portal 10a included in the message m3, the client server 30 accesses the authorization server 10 belonging to the consent portal 10a. Using the ticket included in the message m3, the client server 30 requests the authorization server 10 to provide tokens (authentication tokens) used for access authentication.

[Step S17] When the authorization server 10 receives the ticket, the authorization server 10 verifies whether the ticket is valid. If the ticket is valid, the authorization server 10 communicates with the resource server 20 to execute a process of determining whether to permit use of personal data (described later in a detailed flow).

[Step S18] The authorization server 10 associates, with the token, personal data obtained through the process of determining whether to permit use of personal data, and transmits the token to the client server 30.

[Step S19] The client server 30 transmits, to the resource server 20, the token transmitted from the authorization server 10, and requests personal data by using the token.

[Step S20] To verify the validity of the token transmitted from the client server 30, the resource server 20 transmits the token to the authorization server 10.

[Step S21] When the authorization server 10 receives the tokens transmitted from the resource server 20, the authorization server 10 verifies whether the tokens are valid. If the tokens are valid, the authorization server 10 transmits personal data associated with the tokens to the resource server 20.

[Step S22] The resource server 20 receives the personal data transmitted from the authorization server 10 and transmits the personal data to the client server 30. Examples of the personal data include an identifier (ID) list (information made up of data that satisfies personal attributes and filter information, or the like).

### <Filter Processing>

Next, the filter processing executed on the authorization server 10 and the resource server 20 will be described. In the case of obtaining personal data (ID list) requested by the data usage entity 3a, the authorization server 10 may transmit filter information to the resource server 20 and cause the resource server 20 to execute the filter processing. Alternatively, the filter information may be provided and received between the authorization server 10 and the resource server 20, such that the authorization server 10 and the resource server 20 share execution of the filter processing.

Data extraction regarding personal attribute information (ages or the like) is performed on the authorization server 10, and filter processing other than the extraction of personal attribute information is executed on the authorization server 10 or the resource server 20. The authorization server 10 obtains the final result of the filter processing.

### (Example 1 of Filter Processing)

The authorization server 10 transmits filter information to the resource server 20 and requests an ID list including the filter information. For example, the authorization server 10 transmits filter information of place = in the Metropolitan area, date = February 1st to the resource server 20.

When the resource server 20 receives the filter information transmitted from the authorization server 10, the resource server 20 executes the filter processing to extract IDs including the received filter information from among IDs held by the resource server 20. The resource server 20 transmits the corresponding ID list to the authorization server 10.

For example, when the resource server 20 extracts ID = [100, 101, 103, 105] by filter processing based on the filter information of place = in the Metropolitan area and date = February 1st, the resource server 20 transmits ID = [100, 101, 103, 105] to the authorization server 10.

When the authorization server 10 receives the transmitted ID list, the authorization server 10 extracts IDs having predetermined attribute information from the ID list. For example, the authorization server 10 extracts ID = [101, 105] having attribute information of age = thirties among ID = [100, 101, 103, 105].

Through such processing, as extraction results of the personal data of place = in the Metropolitan area, date = February 1st, and age = thirties, ID = [101, 105] is obtained by the authorization server 10.

### (Example 2 of Filter Processing)

The authorization server 10 extracts, from IDs held by itself, IDs including attribute information and filter information. The authorization server 10 transmits an ID list, which is a result of the extraction, and filter information, which is to be used when the filter processing is executed on the resource server 20, to the resource server 20.

For example, the authorization server 10 extracts ID = [101, 105, 107, 108] of age = thirties from among ID = [101, 105, 106, 107, 108]. Further, the authorization server 10 executes filter processing of place = in the Metropolitan area to extract ID = [101, 105, 108]. The authorization server 10 transmits ID = [101, 105, 108] and filter information of date = February 1st to the resource server 20.

When the resource server 10 receives the ID list and filter information transmitted from the authorization server 10, the resource server 20 executes filter processing to extract an ID including the received filter information from the ID list. The resource server 10 transmits the result to the authorization server 10.

In this case, the resource server 20 extracts ID = [101, 105] including the filter information of date = February 1st from among ID = [101, 105, 108]. The resource server 20 transmits ID = [101, 105] to the authorization server 10.

Through such processing, as extraction results of the personal data of place = in the Metropolitan area, date = February 1st, and age = thirties, ID = [101, 105] is obtained by the authorization server 10.

In the case of Example 2 of the filter processing, the authorization server 10 and the resource server 20 provide and receive filter information to and from each other and share execution of the filter processing while cooperating with each other. Thereby, the filter processing may be executed such that the load is distributed between the authorization server 10 and the resource server 20 without being unevenly distributed. As in Examples 1 of the filter processing, the processing load of the authorization server 10 may also be reduced by causing the resource server 20 to execute all of the filter processing.

### <Process of Determining Whether to Permit Use of Personal Data>

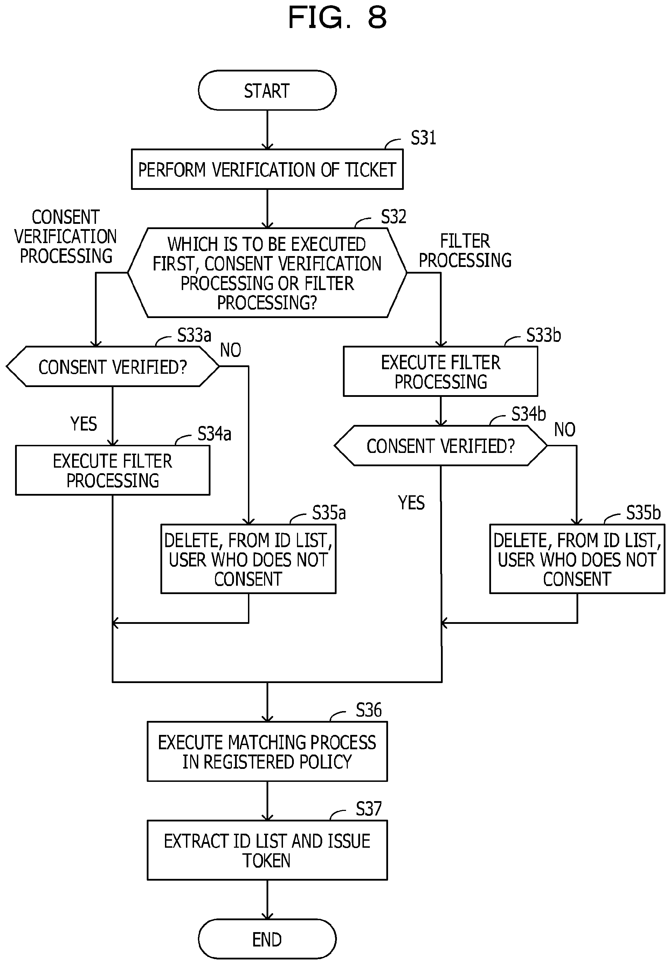

FIG. 8 is a flowchart illustrating an example of operations of a process of determining whether to permit use of personal data. The detailed flow of step S17 in FIG. 7 is illustrated.

[Step S31] When the control unit 11 in the authorization server 10 receives a ticket transmitted from the resource server 20, the control unit 11 performs verification of the validity of the ticket.

[Step S32] Based on a determination index, the control unit 11 determines which is to be executed first, the consent verification processing or the filter processing, in the process of determining whether to permit use of personal data. If data is to be narrowed in the condition that the consent verification processing is executed first and the filter processing is executed secondly, the process proceeds to step S33a. If data is to be narrowed in the condition that the filter processing is executed first and the consent verification processing is executed secondly, the process proceeds to step S33b.

[Step S33a] The control unit 11 executes the consent verification processing for personal data based on attribute information. If the consent has been verified, the process proceeds to step S34a, and if consent is not given, the process proceeds to step S35a.

[Step S34a] In cooperation with the resource server 20, the control unit 11 executes the filter processing of data for which the consent has been verified. The process proceeds to step S36.

[Step S35a] The control unit 11 removes the user who does not give consent, from the ID list. The process proceeds to step S36.

[Step S33b] The control unit 11 executes the filter processing in cooperation with the resource server 20.

[Step S34b] The control unit 11 executes the consent verification processing for the data extracted in the filter processing. If the consent has been verified, the process proceeds to step S36. If the user does not give consent, the process proceeds to step S35b.

[Step S35b] The control unit 11 removes the user who does not give consent, from the ID list. The process proceeds to step S36.

[Step S36] If a policy is registered, the control unit 11 performs a matching process of the registered policy to delete data that meets the registered policy.

### [Step S37] The control unit 11 extracts an ID list and issues tokens.

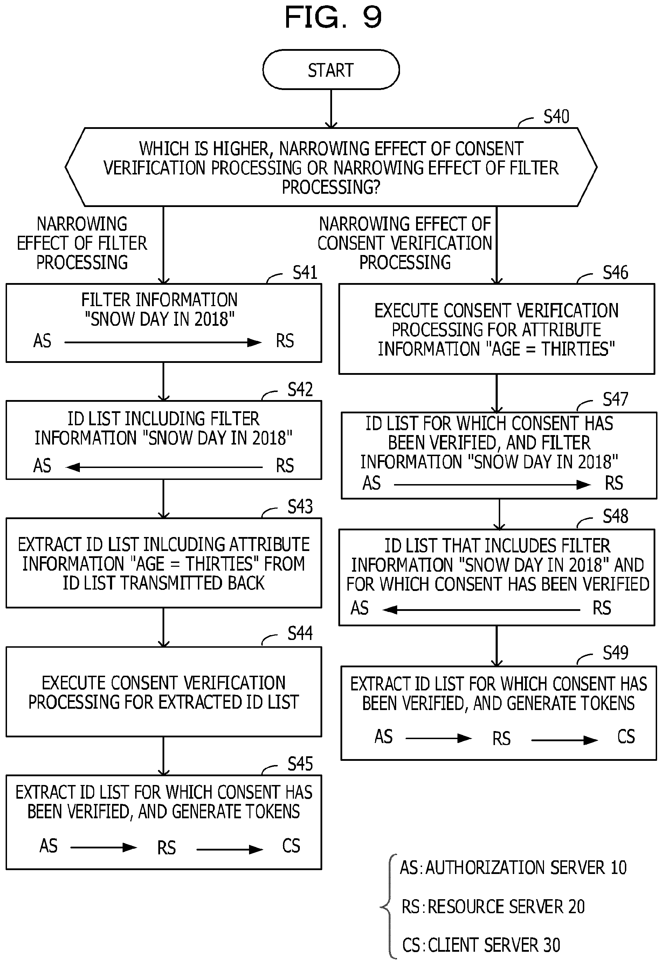

FIG. 9 is a flowchart illustrating an example of narrowing operations. It is assumed that the data usage entity 3a requests the driving data of a person aged in his thirties who drove in the Metropolitan area on a snow day in 2018.

[Step S40] By referencing a dictionary table held by the authorization server 10, the authorization server 10 searches for the narrowing effect of the consent verification processing if the consent verification processing is executed based on personal attribute information ("age = thirties" in this example) and the narrowing effect of the filter processing if the filter processing is executed based on filter information ("a snow day in 2018" in this example).

If the narrowing effect of the filter processing is higher than the narrowing effect of the consent verification processing, the process proceeds to step S41, whereas if the narrowing effect of the consent verification processing is higher than the narrowing effect of the filter processing, the process proceeds to step S46.

[Step S41] The authorization server 10 executes the filter processing before executing the consent verification processing. For example, the authorization server 10 transmits the filter information "a snow day in 2018" to the resource server 20 and requests an ID list including the filter information "a snow day in 2018".

[Step S42] When the resource server 20 receives the filter information "a snow day in 2018" transmitted from the authorization server 10, the resource server 20 executes filter processing to extract, from IDs held by itself, IDs including the filter information "a snow day in 2018". The resource server 20 transmits a list of the IDs to the authorization server 10.

[Step S43] When the authorization server 10 receives the transmitted ID list, the authorization server 10 extracts IDs of the attribute information "age = thirties" from the list. For example, an ID list including the attribute information "age = thirties" and the filter information "a snow day in 2018" is extracted.

[Step S44] The authorization server 10 executes the consent verification processing for each of users corresponding to the ID list extracted in step S43.

[Step S45] The authorization server 10 extracts an ID list for which the consent of the users has been verified. This ID list includes the attribute information "age = thirties" and the filter information "a snow day in 2018". The consent for this ID list has been verified. The authorization server 10 associates this ID list with tokens. As illustrated in FIG. 7, the ID list is transmitted from the authorization server 10 to the resource server 20 and then is transmitted from the resource server 20 to the client server 30.

[Step S46] The authorization server 10 executes the consent verification processing before executing the filter processing. For example, the authorization server 10 executes the consent verification processing for users with the attribute information "age = thirties" and extracts an ID list for which the consent has been verified.

[Step S47] The authorization server 10 transmits the ID list, for which the consent has been verified, and the filter information "a snow day in 2018" to the resource server 20.

[Step S48] When the resource server 20 receives the ID list and the filter information "a snow day in 2018" transmitted from the authorization server 10, the resource server 20 executes filter processing and extracts IDs including the filter information "a snow day in 2018". The resource server20 transmits back a list of the IDs.

[Step S49] The authorization server 10 receives the transmitted list of IDs. The ID list here includes the attribute information "age = thirties" and the filter information "a snow day in 2018". The consent for this ID list has been verified. The authorization server 10 associates this ID list with tokens. As illustrated in FIG. 7, the ID list is transmitted from the authorization server 10 to the resource server 20 and is then transmitted from the resource server 20 to the client server 30.

### <Dictionary Table>

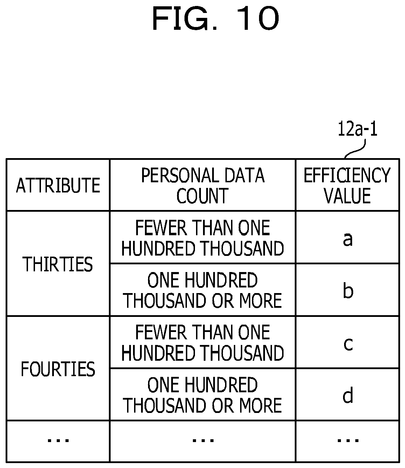

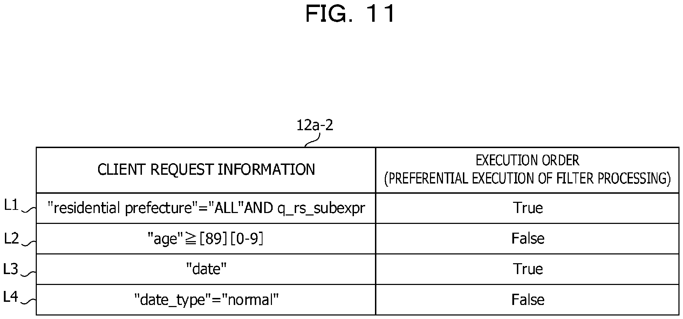

Next, examples of a configuration of a dictionary table will be described with reference to FIG. 10 and FIG. 11. FIG. 10 is a diagram illustrating an example of a dictionary table. A dictionary table 12a-1 contains items of attributes, personal data counts, and efficiency values. The attribute information is a personal attribute, for example, the age. The personal data count is the number of pieces of personal data having the attribute.

The efficiency value is a quantified value of the efficiency of narrowing processing at the time when personal data in a data group held by the resource server 20 is narrowed by the consent verification processing when the consent verification processing is executed before execution of the filter processing. The efficiency value may be suitably set, for example, based on past histories by any of (the operations managers of) the authorization server 10, the resource server 20, and the client server 30.

It is assumed that the authorization server 10 receives a data request including the attribute of age = thirties from the client server 30. For example, when the authorization server 10 recognizes that there are 50,000 pieces of data of age = thirties, the authorization server 10 searches the dictionary table 12a-1 by the attribute of age = thirties and by 50,000, the number of pieces of personal data, to obtain an efficiency value a.

The authorization server 10 sets the obtained efficiency value a as a determination index and compares the efficiency value a with a threshold (assumed as a threshold Th) set in advance. At this point, if a < Th, the authorization server 10 determines to execute the filter processing first and to execute the consent verification processing secondly and, if Th ≤ a, determines to execute the consent verification processing first and to execute the filter processing secondly.

In such a way, by the authorization server 10, an efficiency value obtained by referencing a dictionary table in which the efficiency value is set in association with an attribute and the number of pieces of personal data having the attribute is used as the determination index. Thereby, the execution order with a higher processing efficiency may be suitably and easily determined as the execution order between the consent verification processing and the filter processing.

FIG. 11 is a diagram illustrating an example of a dictionary table. A dictionary table 12a-2 contains items of client request information and execution orders (preferential execution of filter processing). As the client request information, for example, attribute information, such as an age, and filter information, such as a prefecture or a date, are described.

As the execution order, information indicating the order, which is to be executed first, the consent verification processing or the filter processing, is described. In the example in FIG. 11, information indicating whether the filter processing is to be executed before execution of the consent verification processing is described. For example, in the case of True, the filter processing is to be executed before execution of the consent verification processing whereas, in the case of False, the consent verification processing is to be executed before execution of the filter processing.

In an entry L1 of the dictionary table 12a-2, the whole country specified as the residential prefecture and the conditional expression in extraction using filter information are indicated ("residential prefecture" = "ALL" AND q_rs_subexpr). In this case, preferential execution of the filter processing is set to True as the execution order, and thus it is determined that the filter processing is to be executed before execution of the consent verification processing.

In an entry L2, the age specification is indicated to be 80 years old or older ("age" ≥ [89] [0-9]). In this case, preferential execution of the filter processing is set to False as the execution order and thus it is determined that the consent verification processing is to be executed before execution of the filter processing.

In an entry L3, the date specification of data entry is indicated ("date"). In this case, preferential execution of the filter processing is set to True as the execution order, and thus it is determined that the filter processing is to be executed before execution of the consent verification processing.

In an entry L4, the type of data entry is specified as "normal" ("data_type" = "normal"). In this case, preferential execution of the filter processing is set to False as the execution order, and thus it is determined that the consent verification processing is to be executed before execution of the filter processing (It may be assumed that there are a few special entries, and it is estimated that a higher efficiency will be achieved when the consent verification processing is executed first). The corresponding relationship between the client request information and the execution order may be suitably set, for example, based on past histories by any of (the operations managers of) the authorization server 10, the resource server 20, and the client server 30.

In such a way, the authorization server 10 references the dictionary table in which client request information including an attribute or filter information corresponds to an execution order associated with the client request information, and detects an execution order from the dictionary table by using client request information as a determination index. Thereby, the execution order with a higher processing efficiency may be suitably and easily determined as the execution order between the consent verification processing and the filter processing. Other examples of the dictionary table 12a are as described below.

The authorization server 10 stores, in a dictionary table, a conditional expression of attribute information and filter information and a result obtained when the conditional expression is applied to the past cases. The authorization server 10 compares the result with a threshold. If the result is less than the threshold, the authorization server 10 executes the filter processing first.

For example, (age = fifties) Λ (driving on a snow day is recorded) is given as a conditional expression. When this conditional expression is applied to the past cases, it is assumed that one million cases are narrowed down to one hundred thousand cases with the condition of age = fifties, and the one hundred thousand cases are narrowed down to one hundred (100) cases with the condition that driving on a snow day is recorded. The result is 100 cases. Assuming that the threshold is 200, since the result is less than the threshold, the filter processing will be executed before execution of the consent verification processing. In this case, the consent verification processing is executed for 100 cases that have undergone the filter processing. Therefore, when the filter processing is executed first to narrow the cases down to 100 cases and then the consent verification processing is executed, a higher processing efficiency is achieved.

### <Determination Index Other Than Dictionary Table>

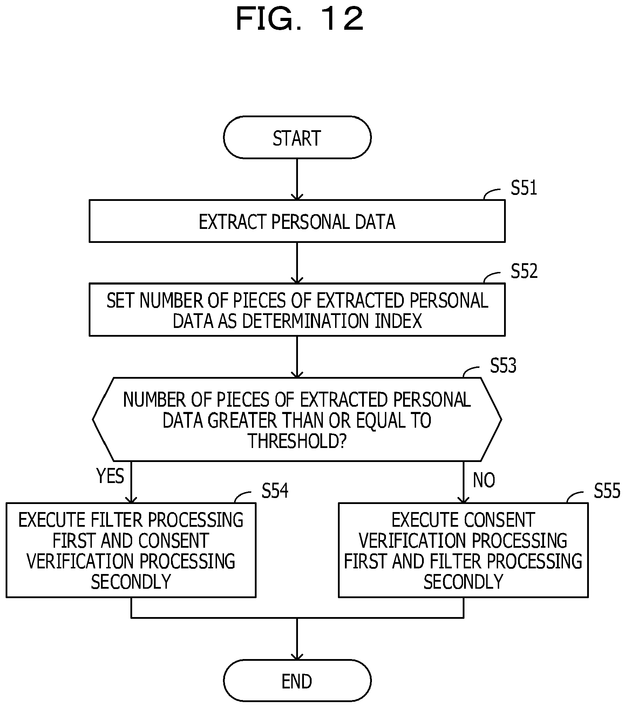

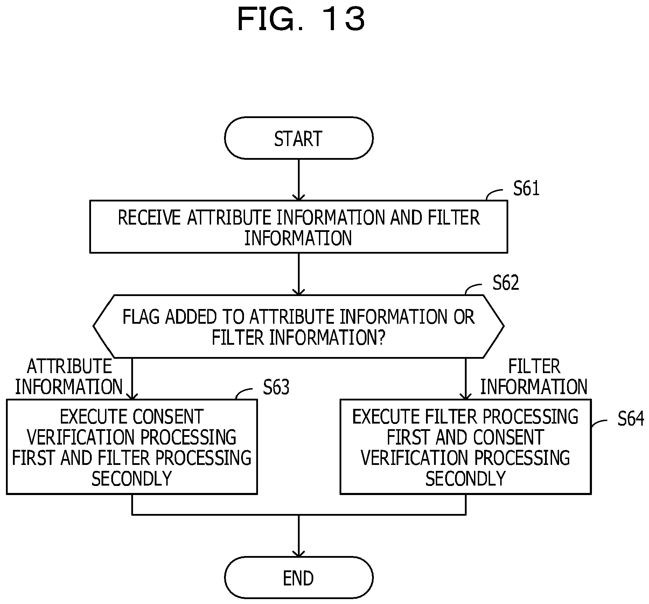

The case where the execution order is determined using a dictionary table has been described above. Hereinbelow, with reference to FIG. 12 and FIG. 13, description will be given of the case where the execution order is determined without using a dictionary table.

FIG. 12 is a flowchart illustrating an example of operations of determining an execution order based on a determination index other than a dictionary table.

[Step S51] The authorization server 10 extracts personal data having an attribute requested by the client server 30 from a data group held by the resource server 20.

[Step S52] The authorization server 10 sets the number of pieces of extracted personal data as a determination index.

[Step S53] The authorization server 10 compares the number of pieces of extracted personal data with a threshold. If the number of pieces of extracted personal data is greater than or equal to the threshold, the process proceeds to step S54. If the number of pieces of extracted personal data is less than the threshold, the process proceeds to step S55.

[Step S54] The authorization server 10 executes the filter processing first and executes the consent verification processing secondly.

[Step S55] The authorization server 10 executes the consent verification processing first and executes the filter processing secondly.

For example, it is assumed that the total number of pieces of data of the data group is 10,000, the attribute requested from the client is the age of thirties, and 1,000 pieces of personal data with the attribute of the age of thirties are extracted from 10,000 pieces of personal data. For threshold = 4,000, the number of pieces of personal data is less than the threshold. Accordingly, in this case, the authorization server 10 determines the execution order in which the consent verification processing is to be executed first and the filter processing is to be executed secondly.

In such a way, the authorization server 10 extracts personal data having an attribute requested by the client from a data group, and compares the number of pieces of personal data, as a determination index, with a threshold to determine the execution order. Thereby, the execution order with a higher processing efficiency may be suitably and easily determined as the execution order between the consent verification processing and the filter processing.

FIG. 13 is a flowchart illustrating an example of operations of determining an execution order based on a determination index other than a dictionary table.

[Step S61] The authorization server 10 receives attribute information and filter information.

[Step S62] The authorization server 10 verifies whether a flag serving as a determination index is added to the attribute information or the filter information. If a flag is added to the attribute information, the process proceeds to step S63. If a flag is added to the filter information, the process proceeds to step S64.

[Step S63] The authorization server 10 executes the consent verification processing first and executes the filter processing secondly.

[Step S64] The authorization server 10 executes the filter processing first and executes the consent verification processing secondly.

For example, when personal data that satisfies the attribute information of the age of thirties and the filter information of February 1st is requested, the authorization server 10 executes the consent verification processing first and executes the filter processing secondly if a flag is set for the attribute information of the age of thirties. If a flag is set for the filter information of the February 1st, the authorization server 10 executes the filter processing first and executes the consent verification processing secondly. The flag setting may be suitably performed, for example, based on past histories, by any of (the operations managers of) the authorization server 10, the resource server 20, and the client server 30.

In such a way, the authorization server 10 determines the execution order in accordance with a flag set for attribute information or filter information. Thereby, the execution order with a higher processing efficiency may be suitably and easily determined as the execution order between the consent verification processing and the filter processing.

The above-described processing functions of the server device 1 and the authorization server 10 according to the present disclosure may be implemented by a computer. In this case, a program that describes processing content of functions to be included in the server device 1 and the authorization server 10 is provided. When the program is executed by a computer, the processing functions described above are implemented on the computer.

The program that describes the content of processing may be recorded on a computer-readable recording medium. Examples of the computer-readable recording medium include a magnetic storage device, an optical disk, a magneto-optical recording medium, and a semiconductor memory. Examples of the magnetic storage device include a hard disk device (HDD), a floppy disk (FD), and a magnetic tape. Examples of the optical disk include a digital versatile disk (DVD), a DVD-random-access memory (RAM), and a CD-ROM/RW. Examples of the magneto-optical recording medium includes a magneto-optical (MO) disk.

When a program is distributed, for example, a portable recording medium, such as a DVD or CD-ROM, on which the program is recorded is sold. Alternatively, a program may be stored in a storage device of a server computer such that program is transferred from the server computer to another computer via a network.

A computer that executes a program stores, for example, in a storage device thereof, a program recorded on a portable recording medium or a program transferred from the server computer. The computer reads the program from the storage device thereof to execute processing according to the program. The computer may also read the program directly from the portable recording medium to execute processing according to the program.

Each time a program is transferred from a server computer coupled via a network to a computer, the computer may execute processing according to the received program. At least some of the processing functions described above may be achieved by an electronic circuit, such as a DSP, an ASIC, or a PLD.

Although embodiments have been illustrated, the configurations of units illustrated in the embodiments may be replaced with other units having the same functions. Any other elements and processes may be added. Any two or more configurations (features) of the embodiments described above may be combined together.

## Claims

1. A program causing a processor included in a computer to execute a process, the process comprising:
receiving a request for obtaining personal data including data information associated with attribute information that satisfies an attribute condition;
determining, based on a determination index, an execution order between consent verification processing to verify consent for use of the personal data and filter processing of the data information based on a filter condition;
when executing the consent verification processing before executing the filter processing, in the filter processing, extracting, among personal data provided with the consent, personal data including data information that satisfies the filter condition; and
when executing the filter processing before executing the consent verification processing, executing the consent verification processing only for the personal data including data information that satisfies the filter condition.

2. The program according to claim 1, wherein the process further comprising:
generating a dictionary table including an efficiency value of narrowing processing at a time when the personal data is narrowed down to the personal data provided with the consent by the consent verification processing when the consent verification processing is executed before execution of the filter processing, the efficiency value being set in association with the number of pieces of the personal data having the attribute information;
searching the dictionary table by the attribute condition and by the number of pieces of the personal data that satisfy the attribute condition, and obtaining the efficiency value; and
in the determining of the execution order, setting the obtained efficiency value as the determination index, comparing the efficiency value with a threshold, and determining to execute the filter processing first and to execute the consent verification processing secondly when the efficiency value is less than the threshold, and to execute the consent verification processing first and to execute the filter processing secondly when the efficiency value is greater than or equal to the threshold.

3. The program according to claim 1, wherein the process further comprising:
generating a dictionary table in which request information including the attribute condition or the filter condition corresponds to the execution order associated with the request information; and
in the determining of the execution order, detecting the execution order from the dictionary table using the request information as the determination index.

4. program according to claim 1, wherein the process further comprising:
extracting personal data including data information associated with attribute information including the attribute condition requested by the client; and
in the determining of the execution order, setting, as the determination index, the number of pieces of the extracted personal data, comparing the number of pieces of the extracted personal data with a threshold, and determining to execute the consent verification processing first and to execute the filter processing secondly when the number of pieces of the extracted personal data is less than the threshold, and to execute the filter processing first and to execute the consent verification processing secondly when the number of pieces of the extracted personal data is greater than or equal to the threshold.

5. The program according to claim 1, wherein
the determining of the execution order sets, as the determination index, a flag set for the attribute condition or the filter condition, and determines to execute the consent verification processing first and to execute the filter processing secondly when the flag is set for the attribute condition, and to execute the filter processing first and to execute the consent verification processing secondly when the flag is set for the filter condition.

6. The program according to claim 1, wherein the process further comprising:
providing and receiving the filter condition to and from a device that holds a personal data group and sharing execution of the filter processing with the device.

7. A sever apparatus comprising:
a receiving unit configured to receive a request for obtaining personal data including data information associated with attribute information that satisfies an attribute condition;
a determination unit configured to determine, based on a determination index, an execution order between consent verification processing to verify consent for use of the personal data and filter processing of the data information based on a filter condition,
an extracting unit configured to, when executing the consent verification processing before executing the filter processing, in the filter processing, extract, among personal data provided with the consent, personal data including data information that satisfies the filter condition; and
an executing unit configured to, when executing the filter processing before executing the consent verification processing, execute the consent verification processing only for the personal data including data information that satisfies the filter condition.

8. An information processing method comprising:
receiving a request for obtaining personal data including data information associated with attribute information that satisfies an attribute condition;
determining, based on a determination index, an execution order between consent verification processing to verify consent for use of the personal data and filter processing of the data information based on a filter condition;
when executing the consent verification processing before executing the filter processing, in the filter processing, extracting, among personal data provided with the consent, personal data including data information that satisfies the filter condition; and
when executing the filter processing before executing the consent verification processing, executing the consent verification processing only for the personal data including data information that satisfies the filter condition.
